# EUROPEAN PATENT APPLICATION

(11) **EP 4 838 868 A1**
(43) Date of publication of application: **11.11.2026**
(21) Application number: 24921765.4
(22) Date of filing: 17.12.2024
(51) Int. Cl.: H04M 1/02

(54) **FOLDABLE ELECTRONIC DEVICE**

(30) Priority: 30.01.2024 CN 202420231656 U
(71) Applicant: Honor Device Co., Ltd., Shenzhen, Guangdong 518040 (CN)
(72) Inventor: ZHANG, Handong, Shenzhen, Guangdong 518040 (CN); GAO, Mingqian, Shenzhen, Guangdong 518040 (CN); WEI, Yameng, Shenzhen, Guangdong 518040 (CN); LI, Haifei, Shenzhen, Guangdong 518040 (CN); LIU, Xianliang, Shenzhen, Guangdong 518040 (CN)
(74) Representative: Epping - Hermann - Fischer
(86) International application number: PCT/CN2024/139789
(87) International publication number: WO 2025/161743

(57) **Abstract**

This application provides a foldable electronic device, including a first body, a second body, a rotating mechanism, and a flexible printed circuit; the rotating mechanism includes a support seat and a support plate; in a thickness direction of the foldable electronic device, the support seat and the support plate are stacked; the support seat includes a first base and a second base; the first base and the second base are arranged in a length direction of the support plate; the first base and the second base are separately disposed; the first base is detachably fastened to the support plate; there is a first gap between the first base and the support plate; a part of the flexible printed circuit is located in the first gap; and the second base is fastened to the support plate. During detaching of the flexible printed circuit, only the first base needs to be separated from the support plate, and the second base does not need to be detached. Therefore, the flexible printed circuit can be quickly detached from a mobile phone, and the second base can be prevented from being damaged, thereby reducing maintenance costs.

## Description

This application claims priority to Chinese Patent Application No. 202420231656.3, filed with the China National Intellectual Property Administration on January 30, 2024 and entitled "FOLDABLE ELECTRONIC DEVICE", which is incorporated herein by reference in its entirety.

### TECHNICAL FIELD

This application relates to the technical field of foldable electronic devices, and in particular, to a foldable electronic device.

### BACKGROUND

With development of science and technology, various foldable electronic devices gradually become an indispensable part of life. For example, a mobile phone is provided with an increasingly large display to improve user experience and increase use functions of the mobile phone. To increase a display area of the mobile phone while reducing a volume of the mobile phone, a foldable-type foldable electronic device emerges.

In a current foldable-type foldable electronic device, a display is supported by two bodies, the two bodies are rotatably connected by using a folding structure, and the two bodies may be unfolded or folded relative to each other, so as to implement unfolding and folding of the display. Different circuit modules are disposed in the two bodies respectively. To implement electrical connection and communication between the two circuit modules in the two bodies, a flexible printed circuit (flexible print circuit, FPC) is disposed in the current foldable-type foldable electronic device, and the two circuit modules are electrically connected by using the flexible printed circuit.

However, in the current foldable-type foldable electronic device, when the flexible printed circuit fails and needs to be repaired, because a through-shaft part of the flexible printed circuit is connected to a base of a rotating mechanism, when the flexible printed circuit is detached from the foldable-type foldable electronic device, the entire base needs to be detached together, which causes extremely high detaching difficulty. In addition, in a process of detaching the base, a case of damage easily occurs, which causes maintenance costs to increase.

### SUMMARY

This application provides a foldable electronic device, which reduces detaching difficulty of a flexible printed circuit, to reduce maintenance costs.

This application provides a foldable electronic device, including a first body, a second body, a rotating mechanism, and a flexible printed circuit.

The rotating mechanism is connected between the first body and the second body, and the rotating mechanism enables the first body and the second body to be unfolded or folded relative to each other.

The first body may specifically include a first housing and a first functional module, the first functional module is disposed inside the first housing, and the first functional module may include components such as a first printed circuit board and a processor. The second body may specifically include a second housing and a second functional module, the second functional module is disposed inside the second housing, and the second functional module may include components such as a second printed circuit board and a sensor.

Relative unfolding or relative folding of the first body and the second body actually refers to relative unfolding or relative folding of the first housing and the second housing. When the first housing and the second housing are unfolded relative to each other, the first housing and the second housing are sequentially arranged in a width direction of the foldable electronic device, and an included angle between the first housing and the second housing is 180 degrees. The rotating mechanism is shielded by the first housing and the second housing. The first housing and the second housing are stacked in a thickness direction of the foldable electronic device, and an included angle between the first housing and the second housing is 0 degrees.

The flexible printed circuit is disposed on the first body, the rotating mechanism, and the second body, so that the first body and the second body are electrically connected. Specifically, the flexible printed circuit may include a first flexible section, a through-shaft section, and a second flexible section that are sequentially connected. The first flexible section is disposed inside the first housing, and is electrically connected to the first printed circuit board. The second flexible section is disposed inside the second housing, and is electrically connected to the second printed circuit board. The through-shaft section is disposed on the rotating mechanism, so that the first printed circuit board and the second printed circuit board are electrically connected to each other by using the first flexible section, the through-shaft section, and the second flexible section sequentially, so that the processor on the first printed circuit board can communicate with the sensor or another component on the second printed circuit board.

The rotating mechanism includes a support seat and a support plate, and in the thickness direction of the foldable electronic device, the support seat and the support plate are stacked. The support seat includes a first base and a second base. The first base and the second base are arranged in a length direction of the support plate. The first base and the second base are separately disposed. The first base is detachably fastened to the support plate. There is a first gap between the first base and the support plate. A part of the flexible printed circuit is located in the first gap, that is, the through-shaft section is located in the first gap. The second base is fastened to the support plate.

In this application, when the flexible printed circuit fails and needs to be repaired, a shaft cover is first opened, then the first base is detached from the support plate, and the second base does not need to be separated from the support plate. In this case, the flexible printed circuit may be detached from a mobile phone together with the first base. It can be learned that in this embodiment, when the flexible printed circuit is detached, only the first base needs to be separated from the support plate, and the second base does not need to be detached. Therefore, the flexible printed circuit can be quickly detached from the mobile phone, and the second base can be prevented from being damaged, thereby reducing maintenance costs.

In some embodiments, a first connector is disposed at an end that is of the first base and that faces the second base. A first connection hole is disposed on the first connector, and in a thickness direction of the first connector, the first connection hole runs through the first connector. A first fitting hole is disposed on a side that is of the support plate and that faces the first base, and the first connection hole is coaxial with the first fitting hole. The foldable electronic device further includes a first fastener, and the first fastener is disposed in the first connection hole and the first fitting hole, so that the first base is detachably fastened to the support plate. The first base and the support plate are connected by using the first fastener, so that the structure is simple, and the operation is convenient.

In some embodiments, a first extension member is convexly disposed on a surface of a side that is of the support plate and that faces the first connector, one end of the first extension member is fastened to the support plate, and the other end of the first extension member faces the first connector. The first fitting hole is disposed on the first extension member. The first extension member is disposed, and the first fitting hole is disposed on the first extension member, so that a depth of the first fitting hole in a Z-axis direction can be increased. Consequently, a fitting part of the first fastener and the first fitting hole is longer, thereby increasing connection stability. In addition, the first extension member is closer to the first connector, and a length of a screw of the first fastener may match the first extension member. An excessive length does not need to be set, so that structural instability caused by an excessive length of the first fastener can be avoided.

In some embodiments, each of two ends of the first base in a length direction of the foldable electronic device is provided with the first connector, and in the width direction of the foldable electronic device, the two first connectors are arranged in a staggered manner. That is, the two first fasteners are located at two diagonal positions of the first base. The two first fasteners form two support points of the first base, and a connection line of the two support points intersects a center axis of the first base in a Y-axis direction, so as to prevent the first base from shaking around the center axis of the first base in the Y-axis direction, thereby increasing stability of the first base.

In some embodiments, there are two second bases, and in the length direction of the foldable electronic device, the first base is located between the two second bases. Each of ends that are of the two second bases and that face the first base is provided with a second connector.

The first connector and the second connector are arranged in the width direction of the foldable electronic device, a first support portion is disposed on a side that is of the first connector and that faces the second connector, and a second support portion is disposed on a side that is of the second connector and that faces the first connector. In the thickness direction, the first support portion and the second support portion are stacked and in contact, and the first support portion is located on a side that is of the second support portion and that faces away from the support plate.

It can be learned from the above that each of two ends of the first base is provided with the first connector, and each of the two first connectors is provided with the first support portion. Each of the two second bases is provided with the second connector, and each of the two second connectors is provided with the second support portion. In a process of assembling the rotating mechanism, after the second base is disposed on the support plate, the first base is disposed between the two second bases, so that the two first support portions and the two second support portions are respectively stacked and in contact, thereby supporting the first base, and further facilitating assembly of the first fastener.

In addition, the two first support portions and the two second support portions are respectively stacked and in contact. The two first support portions are staggered in an X-axis direction, and correspondingly, the two first support portions are also staggered in the X-axis direction. The two first support portions form two supported points of the first base, and a connection line of the two supported points intersects the center axis of the first base in the Y-axis direction. Therefore, before the first fastener is assembled, the first support portion and the second support portion are stacked and in contact, so that rotation of the first base around the center axis of the first base in the Y-axis direction can be prevented, thereby increasing stability of the first base, and reducing difficulty in assembling the rotating mechanism.

In addition, the two first support portions and the two second support portions are respectively stacked and in contact. Further, supported points of the second base may be added, so as to prevent the second base from rotating around the center axis of the second base in the Y-axis direction.

In some embodiments, a support column is disposed between the support plate and the first connector, and two opposite ends of the support column are respectively fastened to the support plate and the first connector. The support column and the first support portion are respectively located on two sides of the first connection hole in a width direction of the first support portion. Therefore, before the first fastener is assembled, the first base has the first support portion and the support column as the supported points, and the first support portion and the support column are spaced apart in the X-axis direction. In this case, adding the supported point of the first base may also be understood as follows: before the first fastener is assembled, the first support portion and the support column pre-position the first base, so as to reduce a risk that the first base rotates around the center axis of the first base in the Y-axis direction. After the first fastener is assembled, the support column and the first support portion may continuously prevent the first base from rotating around the center axis of the first base in the Y-axis direction, so that structural strength of the rotating mechanism is better.

In some embodiments, a first avoidance groove is concavely disposed on a face that is of the first connector and that faces the support plate, in the thickness direction of the foldable electronic device, the first avoidance groove is opposite to the first fitting hole, and the first connection hole runs through a groove bottom surface of the first avoidance groove and a surface of a side that is of the first connector and that faces away from the support plate. An end that is of the first extension member and that faces the first connector extends into the first avoidance groove, and there is a gap between the first extension member and the groove bottom surface of the first avoidance groove.

It may be understood that if the first extension member is in contact with the groove bottom surface of the first avoidance groove to form another supported point, three supported points are sequentially arranged on each first connector in the X-axis direction. If any one of the three supported points is no longer on one plane with the other two supported points, a case in which the first base shakes may occur. However, it is difficult to control the three supported points to be located on one plane. Therefore, if the first extension member is disposed in contact with the groove bottom surface of the first avoidance groove, a risk that the first base shakes around the center axis of the first base in the Y-axis direction may be increased.

In this embodiment, a gap is disposed between the first extension member and the groove bottom surface of the first avoidance groove, so that two supported points are sequentially arranged on each first connector in the X-axis direction. Difficulty in controlling the two supported points to be located on one plane is obviously less than difficulty in controlling the three supported points to be located on the same plane. Therefore, a risk that the first base shakes around the center axis of the first base in the Y-axis direction is reduced.

In some other embodiments, a first avoidance groove is not disposed on the face that is of the first connector and that faces the support plate. In this case, in the thickness direction of the foldable electronic device, there is a gap between the first extension member and the surface that is of the first connector and that faces the support plate.

In some embodiments, a first positioning portion is disposed on the first base, and a second positioning portion is disposed on the second base. The first positioning portion abuts against the second positioning portion to pre-position the first base before the first fastener is assembled, so that the first connection hole is coaxial with the first fitting hole, thereby facilitating assembly of the first fastener. After the first fastener is assembled, the first positioning portion and the second positioning portion maintain an abutting state, so that stability of the first base and the second base can be increased.

In some embodiments, a first positioning surface is disposed at an end that is of the first connector and that faces the second base, a first mating surface is disposed at an end that is of the second base and that faces the first connector, and both the first positioning surface and the first mating surface are parallel to the width direction of the foldable electronic device. In the length direction of the foldable electronic device, the first positioning surface abuts against the first mating surface. The first positioning portion includes the first positioning surface, and the second positioning portion includes the first mating surface. Therefore, the first positioning surfaces of the two first connectors respectively abut against the first mating surfaces of the two second bases, so as to limit displacement of the first base in the Y-axis direction, and further prevent a center axis of the first connection hole and a center axis of the first fitting hole from being staggered in the Y-axis direction, thereby increasing stability of the first base before the first fastener is assembled. Certainly, after the first fastener is assembled, the first positioning surface and the first mating surface continue to maintain the abutting state, thereby increasing stability of the first base. In addition, according to the principle of action and reaction, that is, while the first mating surface applies an abutting force to the first positioning surface, the first positioning surface also applies an abutting force to the first mating surface. Therefore, abutting of the first positioning surface and the first mating surface further increases stability of the second base.

In some embodiments, a second positioning surface is disposed on the side that is of the first connector and that faces the second connector, a second mating surface is disposed on the side that is of the second connector and that faces the first connector, and both the second positioning surface and the second mating surface are parallel to the length direction of the foldable electronic device. In the width direction of the foldable electronic device, the second positioning surface abuts against the second mating surface. The first positioning portion includes the second positioning surface, and the second positioning portion includes the second mating surface.

Therefore, the second positioning surfaces of the two first connectors respectively abut against the second mating surfaces of the two second connectors, so as to limit movement of the first base in the X-axis direction, and further prevent the center axis of the first connection hole and the center axis of the first fitting hole from being staggered in the Y-axis direction, thereby increasing stability of the first base before the first fastener is assembled. In addition, after the first fastener is assembled, the second mating surface abuts against the second positioning surface, so that the first base can be continuously kept stable, and stability of the second base can be further increased.

In addition, if the first positioning surface and the first mating surface are not in contact, and the second positioning surface and the second mating surface are not in contact either, the first base may further generate rotation around the center axis of the first base in the Z-axis direction. By disposing the two first positioning surfaces and the two first mating surfaces that abut against each other, and/or the two second positioning surfaces and the two second mating surfaces that abut against each other, rotation of the first base around the center axis of the first base in the Z-axis direction can be limited.

In some embodiments, a third positioning surface is disposed at an end that is of the first base and that faces the second connector, a third mating surface is disposed at an end that is of the second connector and that faces the first base, and both the third positioning surface and the third mating surface are parallel to the width direction of the foldable electronic device. In the length direction of the foldable electronic device, the third positioning surface abuts against the third mating surface. The first positioning portion includes the third positioning surface, and the second positioning portion includes the third mating surface.

Therefore, before the first fastener is assembled, the two third positioning surfaces at two ends of the first base respectively abut against the third mating surfaces of the two second connectors, so as to further limit displacement of the first base in the Y-axis direction, and prevent the center axis of the first connection hole and the center axis of the first fitting hole from being staggered in the Y-axis direction, thereby further increasing stability of the first base before the first fastener is assembled. In addition, after the first fastener is assembled, the third mating surface abuts against the third positioning surface, so that the first base can be continuously kept stable, and stability of the second base can be further increased.

In some embodiments, a positioning hole is disposed on the first connector, a positioning column is disposed on the side that is of the support plate and that faces the first connector, the first positioning portion includes the positioning hole, and the second positioning portion includes the positioning column. Alternatively, a positioning hole is disposed on the support plate, and a positioning column is disposed on a side that is of the first connector and that faces the support plate. The first positioning portion includes the positioning column, and the second positioning portion includes the positioning hole. A part of the positioning column extends into the positioning hole. Therefore, the first base around the center axis of the first base in the Z-axis direction may be further limited, thereby further increasing stability of the first base before the first fastener is assembled.

In some embodiments, the foldable electronic device further includes a second fastener, and the second base is detachably connected to the support plate by using the second fastener.

In some embodiments, the foldable electronic device further includes a third fastener, and the support plate is detachably connected to the shaft cover by using the third fastener.

In some embodiments, in the thickness direction of the foldable electronic device, there is a second gap between the shaft cover and the first base. The second gap is used to avoid the first fastener.

### BRIEF DESCRIPTION OF DRAWINGS

To describe technical solutions in embodiments or the background of this application more clearly, the following describes accompanying drawings required in the embodiments or the background of this application.
FIG. 1 is a schematic diagram of a structure of a foldable electronic device in a first state according to an embodiment of this application;
FIG. 2 is a schematic diagram of a structure of the foldable electronic device shown in FIG. 1 in a second state;
FIG. 3 is a schematic diagram of an exploded structure of the foldable electronic device shown in FIG. 2;
FIG. 4 is a schematic diagram of a partial structure of a body of the foldable electronic device shown in FIG. 3;
FIG. 5 is a schematic diagram of a partial structure of a rotating mechanism of the foldable electronic device shown in FIG. 3;
FIG. 6 is a schematic diagram of an exploded structure of the rotating mechanism shown in FIG. 5;
FIG. 7 is a schematic diagram of a structure of the rotating mechanism shown in FIG. 5 from another perspective;
FIG. 8 is a schematic diagram of a structure of the rotating mechanism shown in FIG. 5 from still another perspective;
FIG. 9 is a schematic exploded view of a partial structure of the rotating mechanism described in FIG. 6;
FIG. 10 is a schematic exploded view of a partial structure of the rotating mechanism shown in FIG. 9 from another perspective;
FIG. 11 is a schematic diagram of a cross-sectional structure of the rotating mechanism shown in FIG. 5;
FIG. 12 is a schematic sectional view of a partial structure of the rotating mechanism shown in FIG. 5;
FIG. 13 is a schematic exploded view of another partial structure of the rotating mechanism shown in FIG. 5; and
FIG. 14 is a schematic diagram of a partial structure of the rotating mechanism shown in FIG. 5.

### DESCRIPTION OF EMBODIMENTS

The following describes embodiments of this application with reference to accompanying drawings in the embodiments of this application.

A foldable electronic device includes but is not limited to a cellphone (cellphone), a notebook computer (notebook computer), a tablet personal computer (tablet personal computer), a personal digital assistant (personal digital assistant), a wearable device (wearable device), or a mobile device (mobile device). In this embodiment of this application, description is made by using an example in which the foldable electronic device is a mobile phone.

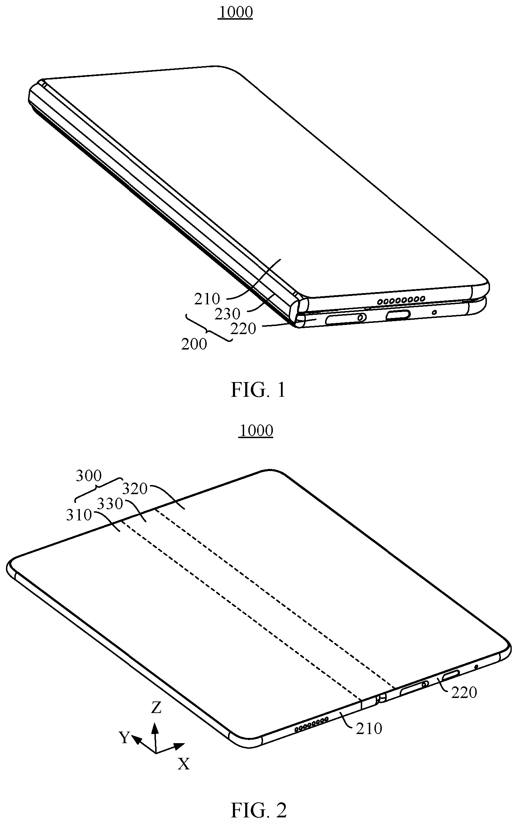

Referring to FIG. 1 and FIG. 2, this application provides referring to FIG. 1 and FIG. 2, FIG. 1 is a schematic diagram of a structure of a foldable electronic device 1000 in a first state according to an embodiment of this application, and FIG. 2 is a schematic diagram of a structure of the foldable electronic device 1000 shown in FIG. 1 in a second state. The foldable electronic device 1000 shown in FIG. 1 is in a folded state, and the foldable electronic device 1000 shown in FIG. 2 is in an unfolded state.

For ease of description, a width direction of the foldable electronic device 1000 is defined as an X-axis direction, a length direction of the foldable electronic device 1000 is defined as a Y-axis direction, a thickness direction of the foldable electronic device 1000 is defined as a Z-axis direction, and every two of the X-axis direction, the Y-axis direction, and the Z-axis direction are perpendicular to each other.

It should be noted that the angles exemplified in this embodiment of this application are allowed to have slight deviations. For example, a 0-degree folding angle of the foldable electronic device 1000 shown in FIG. 1 may have a deviation of ±5 degrees. A 180-degree unfolding angle of the foldable electronic device 1000 shown in FIG. 2 may have a deviation of ±5 degrees. Angles exemplified later may be understood in the same way.

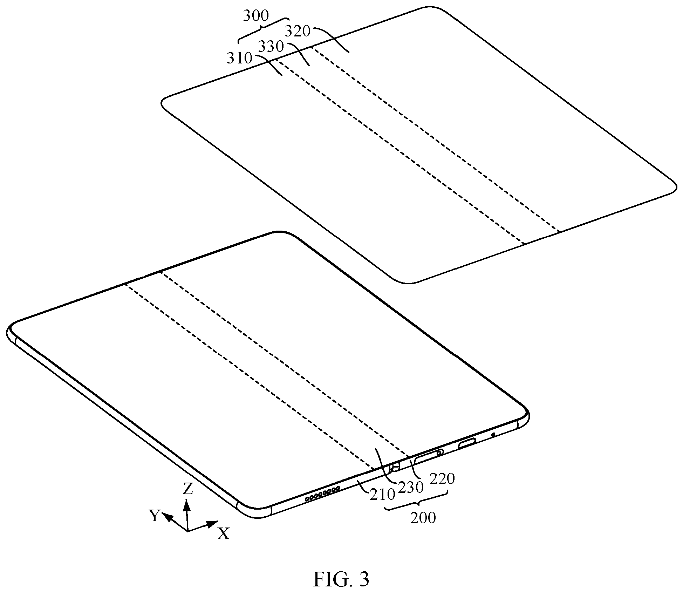

Referring to FIG. 3, FIG. 3 is a schematic diagram of an exploded structure of the foldable electronic device 1000 shown in FIG. 2. This embodiment of this application uses an example in which the foldable electronic device 1000 is a mobile phone for description. The mobile phone includes a body 200 and a display 300. The display 300 is mounted on the body 200. The display 300 is a flexible display. The display 300 includes a display surface and a mounting surface, and the display surface and the mounting surface face away from each other. The display surface is configured to display a text, an image, a video, and the like. The display 300 includes a first display part 310, a second display part 320, and a third display part 330. The third display part 330 is located between the first display part 310 and the second display part 320.

The body 200 includes a first body 210, a second body 220, and a rotating mechanism 230. The display 300 is mounted on the body 200, and the mounting surface is fixedly connected to the body 200. Specifically, the first display part 310 is mounted on the first body 210, and the second display part 320 is mounted on the second body 220. The rotating mechanism 230 is disposed opposite to the third display part 330, to bend the display 300. A width of the third display part 330 in the X-axis direction may be greater than or equal to a width of the rotating mechanism 230. A side that is of the first body 210 and the second body 220 and that faces away from the display 300 is an outer side of the electronic device, and a side that bears the display 300 is an inner side.

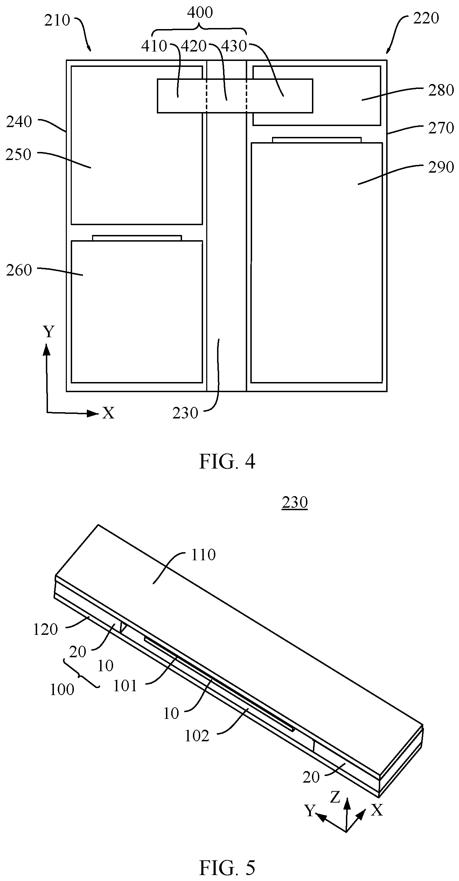

It should be noted that the orientation words such as "top", "bottom", "left", "right", "front", and "rear" used in this embodiment of this application to describe the foldable electronic device 1000 are mainly explained based on a display orientation of the foldable electronic device 1000 in FIG. 2 and FIG. 5, with "top" and "upper" facing a positive direction of a Z axis, "bottom" and "lower" facing a negative direction of the Z axis, "right" facing a positive direction of an X axis, "left" facing a negative direction of the X axis, "rear" facing a positive direction of a Y axis, and "front" facing a negative direction of the Y axis. This does not limit an orientation of the foldable electronic device 1000 in an actual application scenario.

The rotating mechanism 230 can implement switching of the body 200 between the folded state and the unfolded state. Specifically, the rotating mechanism 230 also has a folded state and an unfolded state. When the rotating mechanism 230 is in the folded state, the mobile phone is in the folded state. In this case, the first body 210 and the second body 220 are stacked in the Z-axis direction, an included angle between the first body and the second body is 0 degrees, the display 300 is in the folded state, and a display area is relatively small, which facilitates an operation performed by a user by a single hand and is convenient for storage and carrying. When the rotating mechanism 230 is in the unfolded state, the mobile phone is in the unfolded state. In this case, the first body 210 and the second body 220 are arranged in the X-axis direction, an included angle between the first body and the second body is 180 degrees, the display 300 is also in the unfolded state, and a display area is relatively large, which facilitates viewing by the user, thereby improving user experience. When the included angle between the first body 210 and the second body 220 is 180 degrees and 0 degrees, a tolerance angle range value for assembling is allowed. For example, when the included angle between the first body 210 and the second body 220 is 180 degrees, the tolerance is ±10 degrees. Similarly, when the included angle between the first body 210 and the second body 220 is 0 degrees, the tolerance is also ±10 degrees.

Referring to FIG. 4, FIG. 4 is a schematic diagram of a partial structure of the body 200 of the foldable electronic device 1000 shown in FIG. 3. The first body 210 includes a first housing 240, a first functional module 250, and a first battery 260. The first housing 240 is provided with a first accommodating cavity and a first accommodating groove (not shown in the figure). Both the first functional module 250 and the first battery 260 are mounted in the first accommodating cavity, and the first accommodating groove is configured to accommodate the rotating mechanism 230. The second body 220 includes a second housing 270, a second functional module 280, and a second battery 290. A second accommodating cavity and a second accommodating groove (not shown in the figure) are disposed in the second housing 270, the second functional module 280 is mounted in the second accommodating cavity, and the second accommodating groove is configured to accommodate the rotating mechanism 230. The first display part 310 of the display 300 is actually mounted on the first housing 240, and the second display part 320 of the display 300 is actually mounted on the second housing 270.

The first accommodating groove communicates with the second accommodating groove to form an accommodating groove. The rotating mechanism 230 is mounted in the accommodating groove, so as to implement rotational connection between the first housing 240 and the second housing 270. The first housing 240 and the second housing 270 may be rotated relative to each other by using the rotating mechanism 230, so that the body 200 can be switched between the folded state and the unfolded state.

In this embodiment, the first functional module 250 is configured to be electrically connected to the second body 220, so that the first body 210 and the second body 220 can perform information transmission. The first functional module 250 may include components such as a first printed circuit board (printed circuit board, PCB), a processor, a memory, a communication module, and the first battery 260. The first printed circuit board may be a mainboard of the mobile phone. The first battery 260 and the first printed circuit board are arranged in the Y-axis direction. The processor, the memory, and the communication module are integrated on the first printed circuit board. The memory and the communication module are separately electrically connected to the processor. The memory is configured to store instructions and data. The communication module may implement wireless communication of the mobile phone, such as G/G/G. The communication module may further implement wireless communication of the mobile phone, such as a wireless local area network (wireless local area networks, WLAN), Bluetooth (bluetooth, BT), and near field communication (near field communication, NFC). The first functional module 250 may further include a component that implements another function. This is not listed herein.

In this embodiment, the second functional module 280 is configured to be electrically connected to the first functional module 250 of the first body 210, so that the second body 220 and the first body 210 can perform information transmission.

The second functional module 280 includes components such as a second printed circuit board, an antenna, a motor, and a sensor module. The antenna, the motor, and the sensor module are integrated on the second printed circuit board. The second battery 290 and the second printed circuit board are arranged in the Y-axis direction. The first battery 260 and the second battery 290 may provide electrical energy for other components such as the motor, the sensor module, the antenna, and the display 300, to ensure normal use of the mobile phone. The motor may generate a vibration alert, which may be specifically used for an incoming call vibration alert, or used for touch vibration feedback. The sensor module includes a gyroscope sensor, a temperature sensor, and the like. The gyroscope sensor may be configured to determine a motion posture of the mobile phone. The temperature sensor is configured to detect a temperature, so that the processor executes a temperature processing policy based on the temperature detected by the temperature sensor, to prevent an exception caused by overheating or a low temperature of the mobile phone. The second functional module 280 may further include a component that implements another function. This is not listed herein.

Still referring to FIG. 4, the body 200 further includes a flexible printed circuit 400, and the flexible printed circuit 400 includes a first flexible section 410, a through-shaft section 420, and a second flexible section 430 that are sequentially connected in the X-axis direction. The flexible printed circuit 400 is disposed on the first body 210, the rotating mechanism 230, and the second body 220, so that the flexible printed circuit 400 connects the first body 210 to the second body 220, thereby allowing the first body 210 and the second body 220 to perform communication with each other. Specifically, the first flexible section 410 is disposed in the first accommodating cavity, and the first flexible section 410 is electrically connected to the first printed circuit board. The through-shaft section 420 is disposed on the rotating mechanism 230. The second flexible section 430 is disposed in the second body 220 is disposed in the second accommodating cavity, and the second flexible section 430 is electrically connected to the second printed circuit board.

In this embodiment, the first printed circuit board and the second printed circuit board are connected by using the flexible printed circuit 400, so as to implement electrical connection between a component in the first functional module 250 and a component in the second functional module 280. For example, each of the components such as the battery, the antenna, the motor, and the sensor module in the second functional module 280 may be connected to the processor in the first functional module 250 by using the flexible printed circuit 400. The antenna in the second functional module 280 may be further connected to the communication module in the first functional module 250 by using the flexible printed circuit 400.

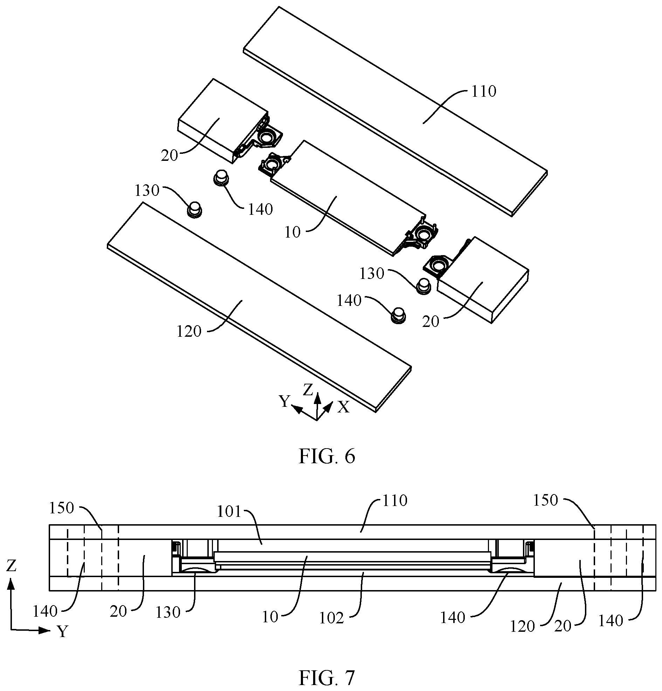

In this embodiment, referring to FIG. 5 and FIG. 6, FIG. 5 is a schematic diagram of a partial structure of the rotating mechanism 230 of the foldable electronic device 1000 shown in FIG. 3. FIG. 6 is a schematic diagram of an exploded structure of the rotating mechanism 230 shown in FIG. 5. FIG. 5 and FIG. 6 show only a part of the rotating mechanism 230 in the Y-axis direction. In fact, a length of the rotating mechanism 230 in the Y-axis direction is substantially the same as lengths of the first housing 240 and the second housing 270.

The rotating mechanism 230 includes a support seat 100, a support plate 110, a shaft cover 120, a synchronous assembly (not shown in the figure), a damping assembly (not shown in the figure), a swing arm assembly (not shown in the figure), and the like. The support seat 100, the support plate 110, and the shaft cover 120 are all in a strip shape, and length directions of the support seat 100, the support plate 110, and the shaft cover 120 are all parallel to the Y-axis direction. In the Y-axis direction, lengths of the support seat 100, the support plate 110, and the shaft cover 120 are approximately the same. In the Z-axis direction, the support plate 110, the support seat 100, and the shaft cover 120 are sequentially stacked. The support seat 100 is fixedly connected to the support plate 110, and the support plate 110 is fixedly connected to the shaft cover 120.

When the mobile phone is in the folded state, the shaft cover 120 is located in the accommodating groove, and when the mobile phone is in the unfolded state, the shaft cover 120 is exposed from the accommodating groove. The shaft cover 120 is located between the first housing 240 and the second housing 270, and is an exterior part of the mobile phone. The support seat 100 is configured to mount the synchronous assembly, the damping assembly, the swing arm assembly, and the like. The support plate 110 is configured to support the third display part 330 of the display 300.

In this embodiment, the support seat 100 includes a first base 10 and two second bases 20. In the Y-axis direction, the first base 10 is located between the two second bases 20, and the first base 10 and the two second bases 20 are separately disposed. The first base 10 is detachably fixedly connected to the support plate 110. In the Z-axis direction, there is a first gap 101 between the first base 10 and the support plate 110. The first gap 101 is used to accommodate the through-shaft section 420 of the flexible printed circuit 400, so that the flexible printed circuit 400 can pass through a shaft smoothly.

A length of the first base 10 in the Y-axis direction and a position of the first base 10 are determined based on a length and a position of the through-shaft section 420 of the flexible printed circuit 400. During setting, the first base 10 and the through-shaft section 420 are opposite in the Z-axis direction, and projection of the through-shaft section 420 on the support seat 100 is entirely located in the first base 10.

In this embodiment, the support seat 100 is divided into the first base 10 and the second base 20, so that the first base 10 and the second base 20 are separately disposed. The first base 10 and the support plate 110 are detachably connected. The second base 20 may be detachably connected to the support plate 110, or the second base 20 and the support plate 110 are integrally formed and fastened.

When the flexible printed circuit 400 fails and needs to be repaired, the shaft cover 120 is first opened, then the first base 10 is detached from the support plate 110, and the second base 20 does not need to be separated from the support plate 110. In this case, the flexible printed circuit 400 may be detached from the mobile phone together with the first base 10. It can be learned that in this embodiment, when the flexible printed circuit 400 is detached, only the first base 10 needs to be separated from the support plate 110, and the second base 20 does not need to be detached. Therefore, the flexible printed circuit 400 can be quickly detached from the mobile phone, and the second base 20 can be prevented from being damaged, thereby reducing maintenance costs.

In some embodiments, referring to FIG. 7, FIG. 7 is a schematic diagram of a structure of the rotating mechanism 230 shown in FIG. 5 from another perspective. In the Z-axis direction, thicknesses of the two second bases 20 are equal, and the thickness of the second base 20 is greater than a thickness of the first base 10. When the support plate 110, the support seat 100, and the shaft cover 120 are sequentially stacked in the Z-axis direction, a top surface of the second base 20 is in contact with a bottom surface of the support plate 110, and a bottom surface of the second base 20 is in contact with a top surface of the shaft cover 120. The first base 10 is located in a space formed through enclosure by the support plate 110 and the two second bases 20. Because the thickness of the first base 10 is less than the thickness of the second base 20, a top surface of the first base 10 and the bottom surface of the support plate 110 may be not in contact with each other, thereby forming the first gap 101. The first gap 101 accommodates the through-shaft section 420 of the flexible printed circuit 400, and the through-shaft section 420 is fastened in the first gap 101. Similarly, a bottom surface of the first base 10 and the top surface of the shaft cover 120 may not be in contact with each other, thereby forming a second gap 102.

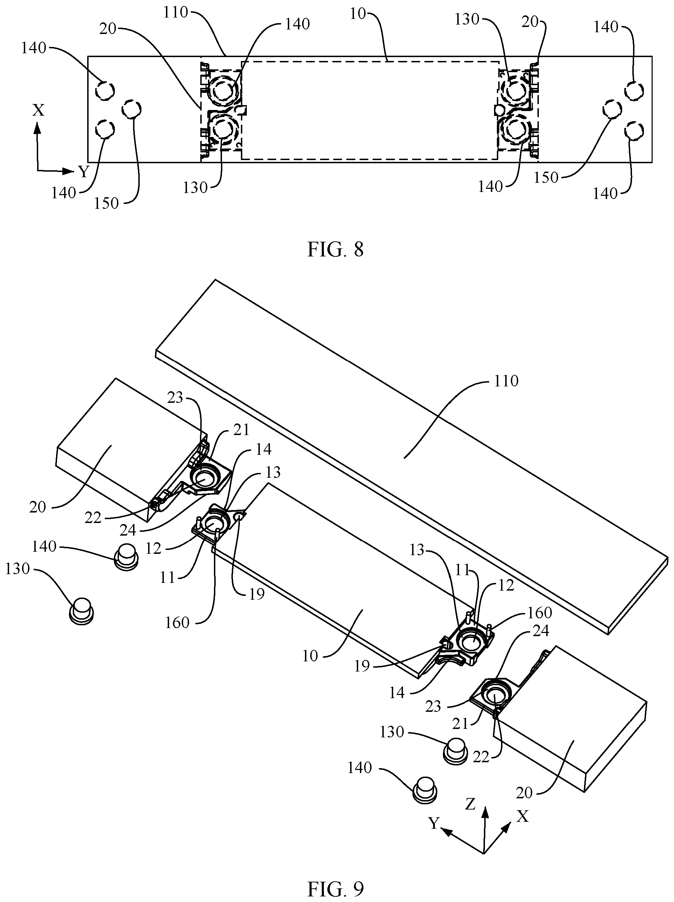

In some embodiments, referring to FIG. 7 and FIG. 8, FIG. 8 is a schematic diagram of a structure of the rotating mechanism 230 shown in FIG. 5 from still another perspective. The first base 10 may be detachably connected to the support plate 110 by using the first fastener 130. Specifically, there may be two first fasteners 130, and the two first fasteners 130 respectively connect two sides that are of the first base 10 and that face away from each other in the X-axis direction to the support plate 110. The first fastener 130 may be a screw, a bolt, or the like. The first fastener 130 may include a screw cap and a screw, and the screw cap is fastened to an end portion of the screw. The second gap 102 may be used to accommodate the screw cap of the first fastener 130, so as to prevent the screw cap of the first fastener 130 from abutting against the shaft cover 120, thereby preventing the shaft cover 120 from being damaged by the screw cap.

The second base 20 may be detachably connected to the support plate 110 by using a second fastener 140, and the second fastener 140 may be a bolt, a screw, or the like. There may be three second fasteners 140. Two of the second fasteners 140 are disposed on a side that is of the second base 20 and that is away from the first base 10, and the two second bases 20 pass through the second base 20 and are fastened to the support plate 110, so that the side that is of the second base 20 and that is away from the first base 10 is detachably connected to the support plate 110. The other second fastener 140 connects a side that is of the second base 20 and that faces the first base 10 to the support plate 110. A position of the second fastener 140 on the side that is of the second base 20 and that is away from the first base 10 in FIG. 7 and FIG. 8 is merely an example. Actually, the position of the second fastener 140 may be designed according to an actual requirement.

The support plate 110 may be detachably connected to the shaft cover 120 by using a third fastener 150, and the third fastener 150 may be a bolt, a screw, or the like. Specifically, the support plate 110 is detachably connected to the shaft cover 120 by using the third fastener 150, and the third fastener 150 sequentially passes through the support plate 110, the support seat 100, and the shaft cover 120, so that the support plate 110 and the shaft cover 120 are detachably connected. A position of the third fastener 150 shown in FIG. 7 and FIG. 8 is merely an example. Actually, the position of the third fastener 150 may be designed according to an actual requirement.

The assembling sequence of the first base 10, the second bases 20, the support plate 110, and the shaft cover 120 is as follows: First, the two second bases 20 are fastened to the support plate 110 by using the second fastener 140, then the first base 10 is fastened to the support plate 110 by using the first fastener 130, and finally, the support plate 110 is fastened to the shaft cover 120 by using the third fastener 150.

The following describes a specific implementation in which the first base 10 is connected to the support plate 110 by using the first fastener 130.

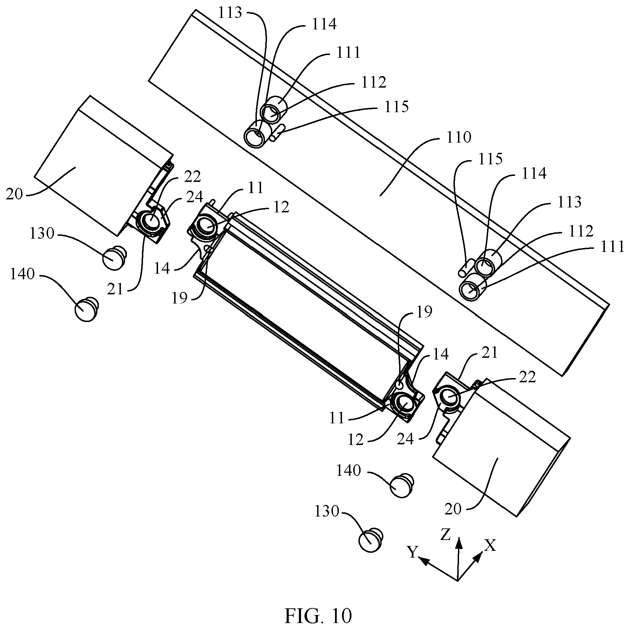

In some embodiments, referring to FIG. 9 and FIG. 10, FIG. 9 is a schematic exploded view of a partial structure of the rotating mechanism 230 in FIG. 6. FIG. 10 is a schematic exploded view of a partial structure of the rotating mechanism 230 shown in FIG. 9 from another perspective. The support plate 110 is in a rectangular plate shape, a top surface of the support plate 110 is configured to support the third display part of the flexible display 300, and the support plate 110 is provided with a first fitting hole 112. The first fitting hole 112 may be a threaded hole. Specifically, a first extension member 111 is convexly disposed on the bottom surface of the support plate 110, an axial direction of the first extension member 111 is parallel to the Z-axis direction, one end of the first extension member 111 is fastened to the bottom surface of the support plate 110, and the other end of the first extension member 111 extends towards a direction away from the bottom surface of the support plate 110. The first fitting hole 112 is disposed on the first extension member 111. Specifically, the first fitting hole 112 may be concavely disposed at an end that is of the first extension member 111 and that is away from the bottom surface of the support plate 110, or the first fitting hole 112 runs through the first extension member 111 in the Z-axis direction.

The first base 10 is approximately in a rectangular plate shape, a first connector 11 is fastened to both a front end surface and a rear end surface of the first base 10, a first connection hole 12 is disposed on the first connector 11, and in the Z-axis direction, the first connection hole 12 runs through the first connector 11. That is, the first connection hole 12 runs through a top surface and a bottom surface of the first connector 11, the top surface of the first connector 11 faces the first gap, and the bottom surface of the first connector 11 faces the second gap. The first connection hole 12 may be a threaded hole.

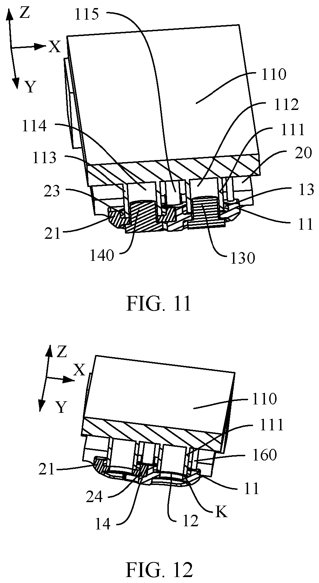

Referring to FIG. 11, FIG. 11 is a schematic diagram of a cross-sectional structure of the rotating mechanism 230 shown in FIG. 5. When the first base 10 and the support plate 110 are connected by using the first fastener 130, the first base 10 and the support plate 110 are stacked in the Z-axis direction, and the first connection hole 12 and the first fitting hole 112 are coaxial. Then, the screw of the first fastener 130 extends into the first connection hole 12 from the bottom surface of the first connector 11, and the screw of the first fastener 130 then enters the first fitting hole 112 from the first connection hole 12. The screw of the first fastener 130 may be in threaded fit with the first connection hole 12, and the screw of the first fastener 130 is threadedly connected to the first fitting hole 112. The screw cap of the first fastener 130 may abut against the bottom surface of the first connector 11, so as to implement detachable connection between the first base 10 and the support plate 110. After the shaft cover 120 is assembled to the rotating mechanism 230, the screw cap of the first fastener 130 is located in the second gap 102. In some other embodiments, the first fitting hole 112 may also be disposed as an unthreaded hole, and the screw of the first fastener 130 is in clearance fit with the first fitting hole 112. It can be learned that the first base 10 and the support plate 110 are connected by using the first fastener 130, so that the structure is simple, and the operation is convenient.

By disposing the first extension member 111, and disposing the first fitting hole 112 on the first extension member 111, a depth of the first fitting hole 112 in the Z-axis direction may be increased, so that a fitting part of the first fastener 130 and the first fitting hole 112 is longer, thereby increasing connection stability. In addition, the first extension member 111 is closer to the first connector 11, and a length of the screw of the first fastener 130 may match the first extension member 111. An excessive length does not need to be set, thereby avoiding structural instability caused by an excessive length of the first fastener 130.

In some other embodiments, the first extension member 111 may not be disposed, but the first fitting hole 112 may be disposed to run through the top surface and the bottom surface of the support plate 110, or the first fitting hole 112 may be concavely disposed on the bottom surface of the support plate 110.

In some embodiments, still referring to FIG. 9 and FIG. 11, a first avoidance groove 13 is concavely disposed on the top surface of the first connector 11, and the first connection hole 12 runs through a groove bottom surface of the first avoidance groove 13 and the bottom surface of the first connector 11. The first avoidance groove 13 is coaxial with the first connection hole 12. A part of the first extension member 111 extends into the first avoidance groove 13. In one aspect, the first avoidance groove 13 may provide space for the first extension member 111, so that the first extension member 111 can be disposed longer, thereby further increasing a depth of the first fitting hole 112, and increasing a length of a fitting part of the first extension member 111 and the screw of the first fastener 130. In some other embodiments, the first extension member 111 may alternatively be directly in contact with the groove bottom surface of the first avoidance groove 13. In some other embodiments, the first avoidance groove 13 may not be disposed. In this case, a gap may be disposed between the first extension member 111 and the top surface of the first connector 11.

It may be understood by a person skilled in the art that, if two opposite ends of the first base 10 in the length direction each have one support point, and a connection line of the two support points is parallel to the center axis of the first base 10 in the Y-axis direction, a problem of rotation of the first base 10 around the center axis in the Y-axis direction is likely to occur.

To resolve the foregoing problem, in some embodiments, the two first connectors 11 at the two ends of the first base 10 are arranged in a staggered manner in the X-axis direction. Therefore, the two first fasteners 130 that connect the first base 10 to the support plate 110 are also arranged in a staggered manner in the X-axis direction. Specifically, the two first fasteners 130 are located in two diagonal positions of the first base 10, the two first fasteners 130 form two support points of the first base 10, and a connection line of the two support points intersects the center axis of the first base 10 in the Y-axis direction, so as to prevent the first base 10 from shaking around the center axis of the first base 10 in the Y-axis direction, thereby increasing stability of the first base 10.

In some embodiments, still referring to FIG. 9, FIG. 10, and FIG. 11, each of ends that are of the two second bases 20 and that face the first base 10 is provided with a second connector 21. The side that is of the second base 20 and that faces the first base 10 is detachably fastened to a second fastener 140 by using the second connector 21. A second extension member 113 may be further disposed on the bottom surface of the support plate 110. For a structure of the second extension member 113 and a mating relationship with another component, refer to the first extension member 111. A second connection hole 22 is disposed on the second connector 21, and a second fitting hole 114 is disposed on the second extension member 113. A second avoidance groove 23 is concavely disposed on a top surface of the second connector 21. For a manner of detachably fastening the second base 20 to another second fastener 140 by using the second connector 21, refer to a manner of detachably fastening the first base 10 to the first fastener 130 by using the first connector 11. For structures and functions of the second connection hole 22, the second fitting hole 114, and the second avoidance groove 23, refer to the first connection hole 12, the first fitting hole 112, and the first avoidance groove 13. Details are not described again.

In some embodiments, referring to FIG. 9 and FIG. 10, the first connector 11 and the second connector 21 are arranged in the X-axis direction, and a first support portion 14 is disposed on a side that is of the first connector 11 and that faces the second connector 21. In the Z-axis direction, a thickness of the first support portion 14 is less than a thickness of the first connector 11, the first support portion 14 and the first connector 11 are distributed in a step shape, a top surface of the first support portion 14 and a top surface of the first connector 11 have a height difference, and a bottom surface of the first support portion 14 and a bottom surface of the first connector 11 are flush or have a height difference.

A second support portion 24 is disposed on a side that is of the second connector 21 and that faces the first connector 11. In the Z-axis direction, a thickness of the second connector 21 is basically the same as the thickness of the first connector 11, and a thickness of the second support portion 24 is less than the thickness of the second connector 21. The second support portion 24 and the second connector 21 are distributed in a step shape, a top surface of the second support portion 24 and the top surface of the second connector 21 are flush or have a height difference, and a bottom surface of the second support portion 24 and a bottom surface of the second connector 21 have a height difference.

Referring to FIG. 12, FIG. 12 is a schematic sectional view of a partial structure of the rotating mechanism 230 shown in FIG. 5. In the Z-axis direction, the first support portion 14 and the second support portion 24 are stacked and in contact, and the first support portion 14 is located on a side that is of the second support portion 24 and that faces away from the support plate 110. Specifically, the top surface of the first support portion 14 is in contact with the bottom surface of the second support portion 24. In addition, a thickness sum of the first support portion 14 and the second support portion 24 is basically the same as the first connector 11, and the thicknesses of the first connector 11 and the second connector 21 are the same. Therefore, after the first support portion 14 and the second support portion 24 are stacked, the top surface of the first connector 11 and the top surface of the second connector 21 are basically flush, and the bottom surface of the first connector 11 and the bottom surface of the second connector 21 are basically flush. A part of a side surface of the first connector 11 and a part of a side surface of the second connector 21 may be in direct contact, so as to increase stability of the first base 10. It may be understood that the side surface of the first connector 11 is a surface that is of the first connector 11 and that is connected between the top surface and the bottom surface of the first connector 11, and the side surface of the second connector 21 is a surface that is of the second connector 21 and that is connected between the top surface and the bottom surface of the second connector 21.

It can be learned from the above that each of two ends of the first base 10 is provided with the first connector 11, and each of the two first connectors 11 is provided with the first support portion 14. Each of the two second bases 20 is provided with the second connector 21, and each of the two second connectors 21 is provided with the second support portion 24. In a process of assembling the rotating mechanism 230, after the second base 20 is disposed on the support plate 110, the first base 10 is disposed between the two second bases 20, so that the two first support portions 14 and the two second support portions 24 are respectively stacked and in contact, thereby supporting the first base 10, and further facilitating assembly of the first fastener 130.

In addition, the two first support portions 14 and the two second support portions 24 are respectively stacked and in contact. The two first support portions 14 are staggered in the X-axis direction, and correspondingly, the two first support portions 14 are also staggered in the X-axis direction. The two first support portions 14 form two supported points of the first base 10. The supported point herein refers to a center point of a stacking part of the first support portion 14 and the second support portion 24. A connection line of the two supported points intersects the center axis of the first base 10 in the Y-axis direction. Therefore, before the first fastener 130 is assembled, the first support portion 14 and the second support portion 24 are stacked and in contact, so as to prevent the first base 10 from rotating around the center axis of the first base 10 in the Y-axis direction, thereby increasing stability of the first base 10, and reducing difficulty in assembling the rotating mechanism 230. After the first fastener 130 is assembled, the first support portion 14 and the second support portion 24 maintain a stacked state, so as to maintain stability of the first base 10.

In addition, the two first support portions 14 and the two second support portions 24 are respectively stacked and in contact, which can also increase stability of the second base 20. Specifically, before the first support portion 14 and the second support portion 24 are stacked, the second base 20 is fastened to the support plate 110 by using the three second fasteners 140, that is, the second base 20 has three support points. After the first support portion 14 and the second support portion 24 are stacked, the second base 20 has four support points, and the four support points are distributed basically in a trapezoidal shape. Compared with the three supports, the second base 20 is more stable, thereby reducing a risk that the second base 20 shakes around the center axis of the second base 20 in the Y-axis direction.

In some embodiments, referring to FIG. 9, FIG. 10, and FIG. 12 together, a support column 160 is disposed between the support plate 110 and the first connector 11, and two opposite ends of the support column 160 are respectively fastened to the support plate 110 and the first connector 11. The support column 160 and the first support portion 14 are respectively located on two sides of the first connection hole 12 in a width direction of the first support portion 14. In a specific implementation, one end of the support column 160 is fastened to the bottom surface of the support plate 110, and the other end of the support column 160 abuts against the top surface of the first connector 11, that is, the support column 160 is convexly disposed on the bottom surface of the support plate 110. In another specific implementation, one end of the support column 160 is fastened to the top surface of the first connector 11, and the other end of the support column 160 abuts against the top surface of the support plate 110, that is, the support column 160 is convexly disposed on the top surface of the first connector 11. In still another embodiment, the support column 160 includes a first support section and a second support section, the first support section is convexly disposed on the bottom surface of the support plate 110, the second support section is convexly disposed on the top surface of the first connector 11, and an end portion that is of the first support section and that faces away from the bottom surface of the support plate 110 abuts against an end portion that is of the second support section and that faces away from the top surface of the first connector 11.

Therefore, before the first fastener 130 is assembled, the first base 10 has the first support portion 14 and the support column 160 that form a plurality of supported points. The support point formed by the support column 160 refers to a center point of a contact part of the first base 10 and the support column 160. In addition, the first support portion 14 and the support column 160 are spaced apart in the X-axis direction. In this case, a supported point of the first base 10 is added, thereby further reducing a risk that the first base 10 rotates around the center axis of the first base 10 in the Y-axis direction. It may also be understood that, before the first fastener 130 is assembled, the first support portion 14 and the support column 160 pre-position the first base 10. After the first fastener 130 is assembled, the support column 160 and the first support portion 14 can continuously prevent the first base 10 from rotating around the center shaft in the Y-axis direction, so that structural strength of the rotating mechanism 230 is better.

In some embodiments, each first connector 11 corresponds to two support columns 160, the two support columns 160 are spaced apart in the Y-axis direction, and a connection line of center axes of the two support columns 160 in the Y-axis direction are parallel to the Y axis. Therefore, each first connector 11 has one first support portion 14 and two support columns 160, which form three supported points in total, and connection lines between any two of the three supported points form a triangle, so that both ends of the first base 10 can be stably supported, thereby further reducing a risk that the first base 10 rotates around the center axis of the first base 10 in the Y-axis direction.

It can be learned from the above that before the first fastener 130 is assembled, one first support portion 14 and two support columns 160 that form three supported points in total are disposed between each first connector 11 and the support plate 110. It may be understood that the three support points pre-position the first base 10 before the first fastener 130 is assembled. In addition, in the X-axis direction, there is a gap between the first extension member 111 located between the first support portion 14 and the support column 160 and the groove bottom surface of the first avoidance groove 13, and there is a gap K between the first extension member 111 and the groove bottom surface of the first avoidance groove 13.

It may be understood that if the first extension member 111 is in contact with the groove bottom surface of the first avoidance groove 13 to form another supported point, three supported points are sequentially arranged on each first connector 11 in the X-axis direction, and the three supported points are respectively the first support portion 14, the first extension member 111, and the support column 160. If any one of the three supported points is no longer on one plane with the other two supported points, a case in which the first base 10 shakes may occur. However, it is difficult to control the three supported points to be located on one plane. Therefore, if the first extension member 111 is disposed in contact with the groove bottom surface of the first avoidance groove 13, a risk that the first base 10 shakes around the center axis of the first base 10 in the Y-axis direction may be increased.

In this embodiment, a gap is disposed between the first extension member 111 and the groove bottom surface of the first avoidance groove 13, so that two supported points are sequentially arranged on each first connector 11 in the X-axis direction. Difficulty in controlling the two supported points to be located on one plane is obviously less than difficulty in controlling the three supported points to be located on the same plane. Therefore, a risk that the first base 10 shakes around the center axis of the first base 10 in the Y-axis direction is reduced.

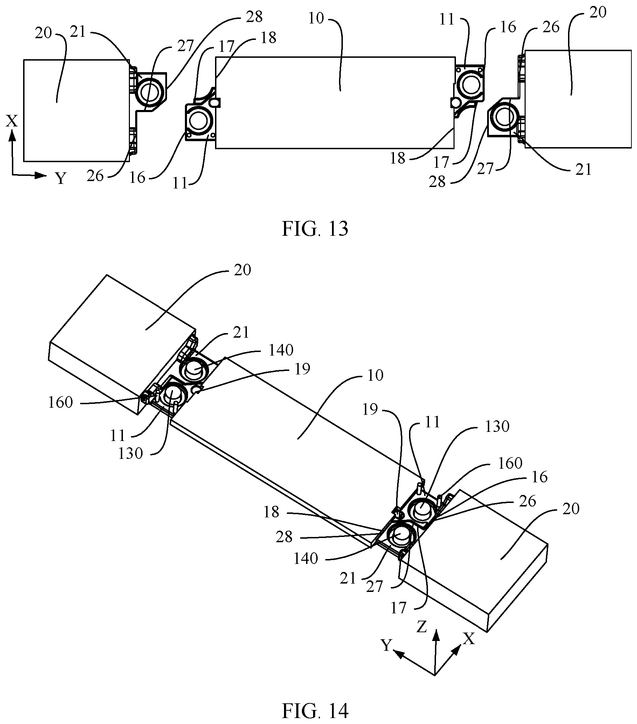

In some embodiments, referring to FIG. 13 and FIG. 14, FIG. 13 is a schematic exploded view of another partial structure of the rotating mechanism 230 shown in FIG. 5, and FIG. 14 is a schematic diagram of a partial structure of the rotating mechanism 230 shown in FIG. 5. A first positioning portion 15 is disposed on the first base 10, and a second positioning portion 25 is disposed on the second base 20. The first positioning portion 15 abuts against the second positioning portion 25 to pre-position the first base 10 before the first fastener 130 is assembled, so that the first connection hole 12 is coaxial with the first fitting hole 112, thereby facilitating mounting of the first fastener 130, and improving assembly efficiency and assembly precision. After the first fastener 130 is assembled, the first positioning portion 15 and the second positioning portion 25 maintain the abutting state, which may increase stability of the first base 10 and the second base 20.

In some embodiments, still referring to FIG. 13 and FIG. 14, a first positioning surface 16 is disposed at an end that is of the first connector 11 and that faces the second base 20, a first mating surface 26 is disposed at an end that is of the second base 20 and that faces the first connector 11, and both the first positioning surface 16 and the first mating surface 26 are parallel to the X-axis direction. In the Y-axis direction, the first positioning surface 16 abuts against the first mating surface 26. The first positioning portion 15 includes the first positioning surface 16, and the second positioning portion 25 includes the first mating surface 26. Therefore, the first positioning surfaces 16 of the two first connectors 11 respectively abut against the first mating surfaces 26 of the two second bases 20, so as to limit displacement of the first base 10 in the Y-axis direction, and further prevent the center axis of the first connection hole 12 and the center axis of the first fitting hole 112 from being staggered in the Y-axis direction, thereby increasing stability of the first base 10 before the first fastener 130 is assembled. Certainly, after the first fastener 130 is assembled, the first positioning surface 16 and the first mating surface 26 continue to maintain the abutting state, thereby increasing stability of the first base 10. In addition, according to the principle of action and reaction, that is, while the first mating surface 26 applies an abutting force to the first positioning surface 16, the first positioning surface 16 also applies an abutting force to the first mating surface 26. Therefore, abutting of the first positioning surface 16 and the first mating surface 26 further increases stability of the second base 20.

In some embodiments, still referring to FIG. 13 and FIG. 14, a second positioning surface 17 is disposed at an end that is of the first connector 11 and that faces the second connector 21, a second mating surface 27 is disposed at an end that is of the second connector 21 and that faces the first connector 11, and both the second positioning surface 17 and the second mating surface 27 are parallel to the Y-axis direction. In the X-axis direction, the second positioning surface 17 abuts against the second mating surface 27. The first positioning portion 15 includes the second positioning surface 17, and the second positioning portion 25 includes the second mating surface 27.

The two first connectors 11 are arranged in a staggered manner in the X-axis direction, and correspondingly, the two second connectors 21 are also arranged in a staggered manner in the X-axis direction. Therefore, one second positioning surface 17 and one second mating surface 27 are sequentially arranged and abut against each other from the positive direction of the X axis to the negative direction of the X axis, so as to prevent the first base 10 from moving towards the positive direction of the X axis. The other second positioning surface 17 and the other second mating surface 27 are sequentially arranged and abut against each other from the negative direction of the X axis to the positive direction of the X axis, so as to prevent the first base 10 from moving towards the negative direction of the X axis. Therefore, the second positioning surfaces 17 of the two first connectors 11 respectively abut against the second mating surfaces 27 of the two second connectors 21, which can limit movement of the first base 10 in the X-axis direction, and further prevent the center axis of the first connection hole 12 and the center axis of the first fitting hole 112 from being staggered in the Y-axis direction, thereby increasing stability of the first base 10 before the first fastener 130 is assembled. In addition, after the first fastener 130 is assembled, the second mating surface 27 abuts against the second positioning surface 17, so that the first base 10 can be continuously kept stable, and stability of the second base 20 can be further increased. For a principle of the second mating surface 27 abutting against the second positioning surface 17 to increase stability of the second base 20, refer to the principle of the first mating surface 26 abutting against the first positioning surface 16 to increase stability of the second base 20.

In addition, if the first positioning surface 16 and the first mating surface 26 are not in contact, and the second positioning surface 17 and the second mating surface 27 are not in contact either, the first base 10 may further generate rotation around the center axis of the first base 10 in the Z-axis direction. By disposing the two first positioning surfaces 16 and the two first mating surfaces 26 that abut against each other, and/or the two second positioning surfaces 17 and the two second mating surfaces 27 that abut against each other, rotation of the first base 10 around the center axis of the first base 10 in the Z-axis direction can be limited.

In some embodiments, still referring to FIG. 13 and FIG. 14, a third positioning surface 18 is disposed at an end that is of the first base 10 and that faces the second connector 21, a third mating surface 28 is disposed at an end that is of the second connector 21 and that faces the first base 10, and both the third positioning surface 18 and the third mating surface 28 are parallel to the X-axis direction. In the Y-axis direction, the third positioning surface 18 abuts against the third mating surface 28. The first positioning portion 15 includes the third positioning surface 18, and the second positioning portion 25 includes the third mating surface 28.

Therefore, before the first fastener 130 is assembled, the two third positioning surfaces 18 at two ends of the first base 10 respectively abut against the third mating surfaces 28 of the two second connectors 21, so as to further limit displacement of the first base 10 in the Y-axis direction, and prevent the center axis of the first connection hole 12 and the center axis of the first fitting hole 112 from being staggered in the Y-axis direction, thereby further increasing stability of the first base 10 before the first fastener 130 is assembled. In addition, after the first fastener 130 is assembled, the third mating surface 28 abuts against the third positioning surface 18, so that the first base 10 can be continuously kept stable, and stability of the second base 20 can be further increased. For a principle of the third mating surface 28 abutting against the third positioning surface 18 to increase stability of the second base 20, refer to the principle of the first mating surface 26 abutting against the first positioning surface 16 to increase stability of the second base 20.

Specifically, lengths of the first connector 11 and the second connector 21 in the Y-axis direction are the same. When the first base 10 and the second base 20 are sequentially arranged in the Y-axis direction, the first connector 11 and the second connector 21 are arranged in the X-axis direction. In this case, an overall structure of the support seat 100 can be relatively compact. In addition, an end surface that is of the first connector 11 and that is away from the first base 10 may also abut against an end surface that is of the second base 20 and that faces the first base 10, a side surface that is of the first connector 11 and that faces the second connector 21 may also abut against a side surface that is of the second connector 21 and that faces the first connector 11, and an end surface that is of the second connector 21 and that is away from the second base 20 may also abut against an end surface that is of the first base 10 and that faces the second base 20. The end surface that is of the first connector 11 and that is away from the first base 10 is the first positioning surface 16, and the end surface that is of the second base 20 and that faces the first base 10 is the first mating surface 26. The side surface that is of the first connector 11 and that faces the second connector 21 is the second positioning surface 17, and the side surface that is of the second connector 21 and that faces the first connector 11 is the second mating surface 27. The end surface that is of the first base 10 and that faces the second base 20 is the third positioning surface 18, and the end surface that is of the second connector 21 and that is away from the second base 20 is the third mating surface 28.

In some embodiments, still referring to FIG. 9, FIG. 10, and FIG. 11, a positioning hole 19 is disposed on the first connector 11, and a positioning column 115 is disposed on a side that is of the support plate 110 and that faces the first connector 11. A part of the positioning column 115 extends into the positioning hole 19. The first positioning portion 15 includes the positioning hole 19, and the second positioning portion 25 includes the positioning column 115. Therefore, the first base 10 around the center axis of the first base 10 in the Z-axis direction may be further limited, thereby further increasing stability of the first base 10 before the first fastener 130 is assembled. Specifically, a triangular extension block extends from the first connector 11 towards the second connector 21, and correspondingly, the second connector 21 forms a triangular clearance space towards the first connector 11. The extension block of the first connector 11 is located in the avoidance space of the second connector 21, so that a volume of the first connector 11 increases. In this way, the first connector 11 has enough space to dispose the positioning hole 19, and a structure of the first connector 11 and the second connector 21 may be further compact.

In some other embodiments, a positioning hole 19 is disposed on the support plate 110, and a positioning column 115 is disposed on a side that is of the first connector 11 and that faces the support plate 110. Correspondingly, the first positioning portion 15 includes the positioning column 115, and the second positioning portion 25 includes the positioning hole 19.

The foregoing descriptions are only some embodiments and implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable electronic device, comprising a first body, a second body, a rotating mechanism, and a flexible printed circuit;
wherein the rotating mechanism is connected between the first body and the second body, and the rotating mechanism enables the first body and the second body to be unfolded or folded relative to each other; and the flexible printed circuit is disposed on the first body, the rotating mechanism, and the second body, so that the first body and the second body are electrically connected; and
the rotating mechanism comprises a support seat and a support plate, and in a thickness direction of the foldable electronic device, the support seat and the support plate are stacked; the support seat comprises a first base and a second base, and the first base and the second base are arranged in a length direction of the support plate; the first base and the second base are separately disposed; the first base is detachably fastened to the support plate; there is a first gap between the first base and the support plate; a part of the flexible printed circuit is located in the first gap; and the second base is fastened to the support plate.

2. The foldable electronic device according to claim 1, wherein a first connector is disposed at an end that is of the first base and that faces the second base; a first connection hole is disposed on the first connector, and in a thickness direction of the first connector, the first connection hole runs through the first connector; and a first fitting hole is disposed on a side that is of the support plate and that faces the first base, and the first connection hole is coaxial with the first fitting hole; and
the foldable electronic device further comprises a first fastener, and the first fastener is disposed in the first connection hole and the first fitting hole, so that the first base is detachably fastened to the support plate.

3. The foldable electronic device according to claim 2, wherein a first extension member is convexly disposed on a surface of a side that is of the support plate and that faces the first connector, one end of the first extension member is fastened to the support plate, and the other end of the first extension member faces the first connector; and the first fitting hole is disposed on the first extension member.

4. The foldable electronic device according to claim 3, wherein each of two ends of the first base in a length direction of the foldable electronic device is provided with the first connector, and in a width direction of the foldable electronic device, the two first connectors are arranged in a staggered manner.

5. The foldable electronic device according to claim 4, wherein there are two second bases, and in the length direction of the foldable electronic device, the first base is located between the two second bases; and each of ends that are of the two second bases and that face the first base is provided with a second connector; and
the first connector and the second connector are arranged in the width direction of the foldable electronic device, a first support portion is disposed on a side that is of the first connector and that faces the second connector, and a second support portion is disposed on a side that is of the second connector and that faces the first connector; and in the thickness direction, the first support portion and the second support portion are stacked and in contact, and the first support portion is located on a side that is of the second support portion and that faces away from the support plate.

6. The foldable electronic device according to claim 5, wherein a support column is disposed between the support plate and the first connector, two opposite ends of the support column are respectively fastened to the support plate and the first connector; and the support column and the first support portion are respectively located on two sides of the first connection hole in a width direction of the first support portion.

7. The foldable electronic device according to claim 6, wherein in the thickness direction of the foldable electronic device, there is a gap between the first extension member and the first connector.

8. The foldable electronic device according to claim 6, wherein a first avoidance groove is concavely disposed on a surface that is of the first connector and that faces the support plate, in the thickness direction of the foldable electronic device, the first avoidance groove is opposite to the first fitting hole, and the first connection hole runs through a groove bottom surface of the first avoidance groove and a surface of a side that is of the first connector and that faces away from the support plate; and
an end that is of the first extension member and that faces the first connector extends into the first avoidance groove, and there is a gap between the first extension member and the groove bottom surface of the first avoidance groove.

9. The foldable electronic device according to claim 5, wherein a first positioning portion is disposed on the first base, a second positioning portion is disposed on the second base, and the first positioning portion abuts against the second positioning portion to pre-position the first base before the first fastener is assembled.

10. The foldable electronic device according to claim 9, wherein a first positioning surface is disposed at an end that is of the first connector and that faces the second base, a first mating surface is disposed at an end that is of the second base and that faces the first connector, and both the first positioning surface and the first mating surface are parallel to the width direction of the foldable electronic device; in the length direction of the foldable electronic device, the first positioning surface abuts against the first mating surface; and the first positioning portion comprises the first positioning surface, and the second positioning portion comprises the first mating surface.

11. The foldable electronic device according to claim 9, wherein a second positioning surface is disposed on the side that is of the first connector and that faces the second connector, a second mating surface is disposed on the side that is of the second connector and that faces the first connector, and both the second positioning surface and the second mating surface are parallel to the length direction of the foldable electronic device; in the width direction of the foldable electronic device, the second positioning surface abuts against the second mating surface; and the first positioning portion comprises the second positioning surface, and the second positioning portion comprises the second mating surface.

12. The foldable electronic device according to claim 9, wherein a third positioning surface is disposed at an end that is of the first base and that faces the second connector, a third mating surface is disposed at an end that is of the second connector and that faces the first base, and both the third positioning surface and the third mating surface are parallel to the width direction of the foldable electronic device; in the length direction of the foldable electronic device, the third positioning surface abuts against the third mating surface; and the first positioning portion comprises the third positioning surface, and the second positioning portion comprises the third mating surface.

13. The foldable electronic device according to claim 9, wherein a positioning hole is disposed on the first connector, a positioning column is disposed on the side that is of the support plate and that faces the first connector, the first positioning portion comprises the positioning hole, and the second positioning portion comprises the positioning column; or
a positioning hole is disposed on the support plate, and a positioning column is disposed on the side that is of the first connector and that faces the support plate; and the first positioning portion comprises the positioning column, and the second positioning portion comprises the positioning hole; and
a part of the positioning column extends into the positioning hole.

14. The foldable electronic device according to any one of claims 1 to 13, wherein the foldable electronic device further comprises a second fastener, and the second base is detachably connected to the support plate by using the second fastener.

15. The foldable electronic device according to any one of claims 2 to 13, wherein the foldable electronic device further comprises a shaft cover, and the shaft cover is disposed on a side that is of the support seat and that faces away from the support plate; and the foldable electronic device further comprises a third fastener, and the support plate is detachably connected to the shaft cover by using the third fastener.

16. The foldable electronic device according to claim 15, wherein in the thickness direction of the foldable electronic device, there is a second gap between the shaft cover and the first base; and the second gap is used to avoid the first fastener.
